# EUROPEAN PATENT APPLICATION

(11) **EP 2 194 689 A1**
(43) Date of publication of application: **09.06.2010**
(21) Application number: 08291145.4
(22) Date of filing: 04.12.2008
(51) Int. Cl.: H04L 29/06

(54) **Method for distributing on demand content, content provider, network node and information manager for realizing such a method**

(71) Applicant: Alcatel Lucent, 75008 Paris (FR)
(72) Inventor: Van den Berghe, Steven, 9620 Zottegem (BE); Verzijp, Nico Victor, 2018 Antwerp (BE); Huysegems, Rafael, 2800 Walem (Mechelen) (BE)
(74) Representative: Narmon, Gisèle Marie Thérèse

(57) **Abstract**

Method for distributing on-demand content in a multicast network that includes the steps of a content provider upon receipt of an incoming request for content coming from a first network node checking if there is bandwidth available in the multicast network to send that content to at least a second network node, and, if the result of that check is positive, sending the content to that second network node using a multicast mechanism.

## Description

The invention relates to a method for distributing on demand content in a network. Methods for distributing on demand content are well known in the art, especially those dedicated to Video on Demand (VoD).

In VoD architectures, such as the one described in US2006/0015637, a server communicates with clients in a standard hierarchical client-server model : a client sends a request to a server for a data file (e. g., a video data file), and in response to the client request, the server sends the requested file to the client. The client may have the capability to store any received data file locally in non-volatile memory for later use. The data can be sent to the user in unicast mode or on-demand multicast can be used. The latter is used to reduce the required bandwidth by dynamically aggregating users that make requests for the same content closely spaced in time so that they can share the same multicast streams.

However, even when using the multicast alternative, on-demand content delivery can be highly band with consuming and can thus overload the network. It is therefore an object of the invention, to provide a method for distributing on demand content that overcomes the above problem.

The method according to the invention is **characterised in that** said method includes the steps of a content provider upon receipt of an incoming request for content coming from a first network node checking if there is bandwidth available in said multicast network to send said content to at least a second network node, and, if the result of said check is positive, sending said content to said at least second network node using a multicast mechanism.
In this way, content is sent to a node in anticipation of the node needing this content, but only when bandwidth is available. Moreover, since the content is only sent to a node when another node has requested it, there is statistically a higher possibility that this information will also be of interest to this node

A feature of the method according to the invention is that said method includes an additional step of in a second check checking if said at least second network node has storage capacity for storing said content, and sending said content to said at least second network node only if also the result of said second check is positive. In this way it is ensured that no content is sent to a network node if this node has no storage capacity to store it.

Another additional feature of the method according to the invention is that said second node is a set-top box via which a user device can receive said content, said method including the additional steps of said content provider sending to an information manager in said multicast network an information signal indicating that said content is available for a user of said user device, said information manager sending to said second network node a push signal indicating that said content is available for said user at predetermined favourable conditions, said second network node translating said push signal in an information message and sending said information message to said user device, and said user device translating said information message in a form understandable for said user or that said second node is an access node in said multicast network via which a user device can receive said content, said method including the additional steps of said content provider sending to an information manager in said multicast network an information signal indicating that said content is available for a user of said user device, said information manager sending to said second network node a push signal indicating that said content is available for said user at predetermined favourable conditions, said access node translating said push signal in an information message and sending said information massage to said user device, and said user device translating said information message in a form understandable for said user.
This in order to push a user of an end device controlled by the set-top box or by the access node to access the data.

Still another additional feature of the method according to the invention is that said second node upon receipt of said content stores it in a storage means and upon receipt of new content replaces said content by said new content in accordance with a replacement algorithm. In this way the content does not remain stored for ever, but is overwritten in accordance with a predetermined algorithm, such as replacing the least recently accessed content.

The subject invention also relates to a Content Provider, a Network Node and an Information Manager for realizing the subject method in accordance with claims 6 to 8, 9 to 10 and 11 to 12 respectively.

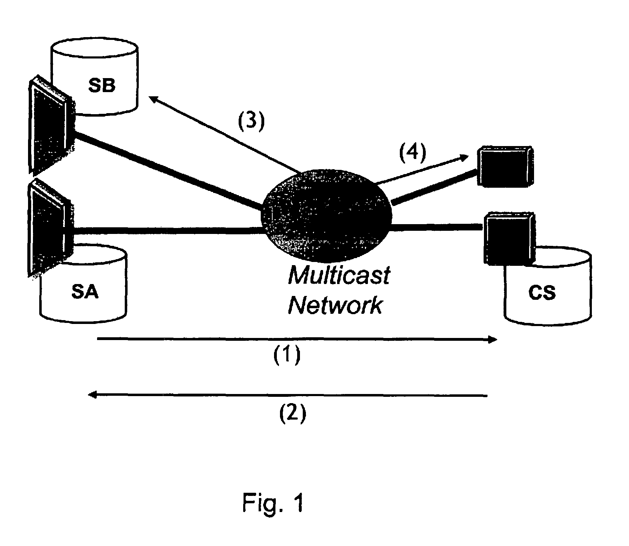

The above and other aspects of the invention will be apparent from and will be elucidated with reference to the embodiment described hereinafter wherein Fig. 1 shows a simplified network wherein the method according the invention is realized.

This network consists of a content provider module CP, an Information Manager IM, a first network node UA and a second network node UB, all interconnected via a multicast network N. This network is for instance an Internet Protocol (IP) network. UA and UB are set-top boxes via which respective users A and B (not shown on the figure) can receive content on demand. IM comprises a transmission part that is adapted to transmit Electronic Program (EP) information to UA and UB on the content that can be received. UA and UB have storage means SA and SB respectively where they can store downloaded content. CP is connected to a storage module CS where available content is stored for distibution.

The working of the method according to the invention is described hereafter making use of a scenario where a user of UA requests via UA to download a video.

In a first step UA sends a request (1) to CP to get the video. Upon receipt of this request, CP retrieves from CS the requested video content and sends it to UA (shown by arrow (2)). CP then checks if there is enough bandwidth available in N, to send the video content also to UB (arrow (3)). This is done using the PCN (Pre-Congestion Notification) protocol as defined by IETF PCN workgroup (http://www.ietf.org/html.charters/pcn-charter.html,http://www.ietf.org/internet-drafts/draft-ietf-pcn-architecture-08.txt). More information on this protocol can be found in the article "Preliminary performance evaluation of a pre-congestion notification solution for DiffServ regions" by Hein Mekkes.

If there is enough bandwidth available, the video content is also sent to UB and stored there in SB. CP informs IM, about the availability of the video content in SB (arrow (4)), and IM includes this information in the EP information that it sends to UB. Via UB user B is informed about this availability and the conditions for obtaining it that are also transferred with the EP information and can then decide on whether or not to access this content.

IM also contains a storage module (not shown) that stores information on the user profile of A and B, and on conditions under which the sent content can be made available to users in function of their profile. The conditions included in the EP information mentioned above are retrieved from this storage module. The profile information can be obtained from a profiling engine such as described in the article "A profiling Engine for Converged Service Delivery Platform from Armen Aghasaryan, Stéphane Betgé-Brezetz, Christophe Senot and Yann Toms (Bell Labs technical journal 13(2), 93 - 104 (2008)). The content can f.i. be offered at a reduced priceAlthough the method according to the invention is described using above simplified network, it is equally well applicable to a complex network with a lot of users and several content providers.

In an alternative embodiment CP not only checks the bandwidth availability in N towards UB, but it also checks if there is enough capacity available in SB to store the video content. An advantage of this additional feature is that the content is not uselessly sent to UB when there is not enough storage capacity in SB. This capacity check can be done using the TR-140 standard as published by the Broadband Forum (*www.broadband-forum.org*/*technical*/*download*/*TR-140.pdf*).

The video content in SB is not kept eternally. Whenever SB needs to store other content, the original content is overwritten based on a predetermined algorithm. An example would be to use a least recently accessed algorithm, replacing the content that resides in the storage and that is being used the least.

UB contains, apart from the elements needed for its normal on demand activities, a receiving part (not shown) to receive undemanded content and EP information describing the content and the conditions under which B can access the content, and a conversion and transmission module (also not shown) to send both the EP information and the conditions to an end user device connected to UB (and also not shown) in a format understandable by B.

UB, CP and IM are herein not further described in details because it is obvious for a person skilled in the art how to implement them based on the above functional descriptions.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. For instance, UA and UB are in the above embodiment set-top boxes via which users have access to video content. They can however equally well be access nodes equipped with storage, and acting as video servers to attached clients.

IM is described as one module, but can physically be several entities each realizing complementary parts of the functionality of the described IM.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application.

It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

The expression "for" in for example "for receiving", "for transmitting", "for checking", etc. does not exclude that other functions are performed as well, simultaneously or not. The expressions "X coupled/connected to Y" and "a coupling/connecting between X and the like expressions do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

## Claims

1. Method for distributing on-demand content in a multicast network (N), **characterized in that** said method includes the steps of a content provider (CP) upon receipt of an incoming request for content coming from a first network node (UA) checking if there is bandwidth available in said multicast network to send said content to at least a second network node (UB), and, if the result of said check is positive, sending said content to said at least second network node using a multicast mechanism.

2. Method according to claim 1, **characterized in that** said method includes an additional step of in a second check checking if said at least second network node (UB) has storage capacity for storing said content, and sending said content to said at least second network node only if also the result of said second check is positive.

3. Method according to claim 1 or 2, **characterized in that** said second node (UB) is a set-top box via which a user device can receive said content, said method including the additional steps of said content provider (CP) sending to an information manager (IM) in said multicast network an information signal indicating that said content is available for a user of said user device, said information manager sending to said second network node (UB) a push signal indicating that said content is available for said user at predetermined favourable conditions, said second network node translating said push signal in an information message and sending said information message to said user device, and said user device translating said information message in a form understandable for said user.

4. Method according to claim 1 or 2, **characterized in that** said second node (UB) is an access node in said multicast network via which a user device can receive said content, said method including the additional steps of said content provider (CP) sending to an information manager (IM) in said multicast network an information signal indicating that said content is available for a user of said user device, said information manager sending to said second network node (UB) a push signal indicating that said content is available for said user at predetermined favourable conditions, said access node translating said push signal in an information message and sending said information massage to said user device, and said user device translating said information message in a form understandable for said user.

5. Method according to claim 1 or 2, **characterized in that** said second node (UB) upon receipt of said content stores it in a storage means and upon receipt of new content replaces said content by said new content in accordance with a replacement algorithm.

6. Content provider (CP) for use in a multicast network (N) and comprising reception means adapted to receive content request messages from a first network node (UA) in said multicast network and transmission means adapted to transmit content to said first network node (UA) **characterized in that** said content provider (CP) in addition comprises first detection means adapted to check if there is enough bandwidth available in said multicast network to transmit said content to a second network node (UB) and to send a first indication thereof to said transmission means, said transmission means also being adapted, when receiving said first indication, to send said content to said second network node.

7. Content provider (CP) according to claim 6, **characterized in that** said content provider comprises second detection means adapted to detect if said second network node (UB) has enough storage capacity to store said content and to send a second indication thereof to said transmission means, said transmission means being adapted to send said content to said second network node, only when receiving said first and said second indication.

8. Content provider (CP) according to claim 6, **characterized in that** said transmission means are also adapted to send to an information manager module (IM) in said multicast network an information signal to inform said information manager module about the sending of said content to said second network node.

9. Network node (UB) for use in a communication network and comprising reception means adapted to receive content from a content provider (CP) of said communication network, **characterized in that** said reception means are also adapted to receive from an information manager module (IM) connected to said communication network a push signal indicating that said content is available for a user of a user device connected to said network node at predetermined favourable conditions, said access node comprising translation means adapted to translate said push signal in an information message and transmission means adapted to transmit said information massage to said user device.

10. Network node (UB) according to claim 9, **characterized in that** said network node also comprises a storage means adapted to store said content and to replace said content by other content in accordance with a replacement algorithm upon receipt of said other content.

11. Information Manager (IM) for use in a communication network and comprising transmission means adapted to send to a network node (UB) also connected to said communication network, information on available content, **characterized in that** said transmission means is adapted to send said information to said network node upon receipt of an indication message from a content provider (CP) connected to said communication network, said indication message indicating that said available content was sent to said network node (UB) and said information being related to favourable conditions at which said content is made available to a user of said network node.

12. Information Manager (IM) according to claim 11, **characterized in that** said Information manager contains database means adapted to store profile information on said user and processing means adapted to determine said favourable conditions in function of said profile information

## Amended claims

### Amended claims in accordance with Rule 137(2) EPC.

**1.** Method for distributing on-demand content in a multicast network (N), **characterized in that** said method includes the steps of a content provider (CP) upon receipt of an incoming request for content coming from a first network node (UA) checking if there is bandwidth available in said multicast network to send said content to at least a second network node (UB) that has not requested said content, and, if the result of said check is positive, sending said content to said first network node and to said at least second network node using a multicast mechanism.

**2.** Method according to claim 1, **characterized in that** said method includes an additional step of in a second check checking if said at least second network node (UB) has storage capacity for storing said content, and sending said content to said at least second network node only if also the result of said second check is positive.

**3.** Method according to claim 1 or 2, **characterized in that** said second node (UB) is a set-top box via which a user device can receive said content, said method including the additional steps of said content provider (CP) sending to an information manager (IM) in said multicast network an information signal indicating that said content is available for a user of said user device, said information manager sending to said second network node (UB) a push signal indicating that said content is available for said user, said second network node translating said push signal in an information message and sending said information message to said user device, and said user device translating said information message in a form understandable for said user.

**4.** Method according to claim 1 or 2, **characterized in that** said second node (UB) is an access node in said multicast network via which a user device can receive said content, said method including the additional steps of said content provider (CP) sending to an information manager (IM) in said multicast network an information signal indicating that said content is available for a user of said user device, said information manager sending to said second network node (UB) a push signal indicating that said content is available for said user said access node translating said push signal in an information message and sending said information massage to said user device, and said user device translating said information message in a form understandable for said user.

**5.** Method according to claim 1 or 2, **characterized in that** said second node (UB) upon receipt of said content stores it in a storage means and upon receipt of new content replaces said content by said new content in accordance with a replacement algorithm.

**6.** Content provider entity (CP) for use in a multicast network (N) and comprising reception means adapted to receive content request messages from a first network node (UA) in said multicast network and transmission means adapted to transmit content to said first network node (UA) **characterized in that** said content provider (CP) in addition comprises first detection means adapted to check if there is enough bandwidth available in said multicast network to transmit said content to a second network node (UB) that has not requested said content and to send a first indication thereof to said transmission means, said transmission means also being adapted, when receiving said first indication, to send said content to said second network node and to said first network using a multicast mechanism.

**7.** Content provider entity (CP) according to claim 6, **characterized in that** said content provider comprises second detection means adapted to detect if said second network node (UB) has enough storage capacity to store said content and to send a second indication thereof to said transmission means, said transmission means being adapted to send said content to said second network node, only when receiving said first and said second indication.

**8.** Content provider entity (CP) according to claim 6, **characterized in that** said transmission means are also adapted to send to an information manager module (IM) in said multicast network an information signal to inform said information manager module about the sending of said content to said second network node.

**9.** Network node (UB) for for realizing a method according to any of the claims 1 to 5, said network node comprising reception means adapted to receive content from a content provider (CP) of said communication network, **characterized in that** said reception means are also adapted to receive from an information manager module (IM) connected to said communication network a push signal indicating that said content is available for a user of a user device connectable to said network node, said network node comprising translation means adapted to translate said push signal in an information message and transmission means adapted to transmit said information massage to said user device.

**10.** Network node (UB) according to claim 9, **characterized in that** said network node also comprises a storage means adapted to store said content and to replace said content by other content in accordance with a replacement algorithm upon receipt of said other content.

**11.** Information Manager module (IM) for realizing a method according to any of the claims 1 to 5, said information manager module comprising transmission means adapted to send to a network node (UB) also connected to said communication network, information on available content, **characterized in that** said transmission means is adapted to send said information to said network node upon receipt of an indication message from a content provider entity (CP) connected to said communication network, said indication message indicating that said available content was sent to said network node (UB) and under what conditions said available content is made avaialble to a user of a user connectable to said network node.

**12.** Information Manager module (IM) according to claim 11, **characterized in that** said Information manager module contains database means adapted to store profile information on said user and processing means adapted to determine conditions in function on which said content is made available based on said profile information
